Europäisches Patentamt

**European Patent Office**

Office européen des brevets

(19)

(11) Publication number: **0 036 917**
**B1**

## (12) EUROPEAN PATENT SPECIFICATION

(45) Date of publication of patent specification: **21.09.83**

(21) Application number: **80301030.5**

(22) Date of filing: **01.04.80**

(51) Int. Cl.³: **B 24 B 23/08, B 23 B 3/26**

(54) Machine tool for dressing the end face of an engine cylinder liner.

(43) Date of publication of application:
**07.10.81 Bulletin 81/40**

(45) Publication of the grant of the patent:
**21.09.83 Bulletin 83/38**

(84) Designated Contracting States:
**BE DE FR GB IT NL**

(56) References cited:
**DE - A - 2 921 725**
**DE - C - 832 988**
**FR - A - 2 145 191**
**GB - A - 1 526 786**
**US - A - 1 747 944**
**US - A - 1 832 923**
**US - A - 2 159 287**
**US - A - 2 736 995**
**US - A - 3 608 172**
**US - A - 4 050 335**
**US - A - 4 177 610**

(73) Proprietor: **P. & O. Australia Limited**
**55, Hunter Street**
**Sydney New South Wales 2000 (AU)**

(72) Inventor: **Pullen, William Hayden**
**14, Magarra Place**
**Seaforth New South Wales (AU)**

(74) Representative: **Moss, Bernard Joseph et al,**
**D.Young & Co. 10 Staple Inn**
**London, WC1V 7RD (GB)**

Courier Press, Leamington Spa, England.

Machine tool for dressing the end face of an engine cylinder liner

This invention relates to reciprocating engines in which the cylinder (or cylinders) is constituted by a cylindrical liner either of the wet or dry sleeve type. More particularly, the invention is concerned with liners of the kind indicated, as used in relatively large engines such as marine engines of diesel or other kind. In such engines the inside diameter of the liner or sleeve may be of the order of 1 metre, with a sleeve length of say 2 metres; in such cases the weight of the liner could very well be of the order of 5 to 7 tons.

Liners as referred to above have an end face, which is usually stepped, being the upper end surface of the liner which is under pressure during use and upon which a cylinder cover is seated and forcibly held so to constitute, with the cylinder end face, a sealed joint required to be proof against gas leakage under the pressure of operation.

After relatively short terms of operation, the pressure end face of the liner is prone to leak gas through distortion and consequent loss of required sealing contact with the cylinder cover and thus it becomes necessary for the end face to be dressed so as to bring it back into leakproof circumferential contact with the cover.

Hitherto, two common methods have been employed to dress the end faces of liners of the kind in question. The first of these is to leave the liner in situ in the engine and then apply a lapping ring charged with suitable abrasive material and manually operating the lapping ring until a true valve-like surface is formed on the liner end. This lapping operation is usually performed manually and is open to objection in several respects in that in the course of a single liner lapping the lap rings become worn and may have to be refaced by machining several times in the course of a single dressing operation and even so it is not always possible to produce a liner end face which is preferably flat. The lapping operation is time-consuming and therefore can put a vessel out of commission for long periods. It follows from this that the lapping process is extremely expensive in man-hours.

The objections to the lapping method are such that in many instances the indicated alternative procedure is adopted. This consists of lifting the liner out of the engine and taking it to a shore facility for machining in a lathe. This however is also objectionable because of the time involved in removing the liner, taking it to the workshop, bringing it back and replacing it, and in that the lifting and replacement of the liner from and into the ship usually requires special crane equipment having a lifting capacity beyond that of the lifting equipment normally available on the vessel.

The object of the present invention is to overcome the indicated disabilities in a very simple way by way of a machine tool with which a cylinder end face may be quickly and easily resurfaced in situ. US—A—1747944 provides a portable machine tool for dressing the surface of a manhole casing interior. This known machine tool has a base (10) positionable on the end of the manhole casing (6) by means of cylindrical rollers (16) riding on a horizontal circular runway (5) and carries on a vertical shaft (20) a horizontal arm (11) provided with a metal dressing tool (28) for engaging and dressing the inner surface of the casing (6). The rollers (16) are not positively constrained radially of and vertically to the runway (5) and thus the tool (28) can deviate during its cutting operation with consequent machining inaccuracies unacceptable for dressing a cylinder liner end face.

US—A—4177610 discloses apparatus for machining in situ a large workpiece such as a part of a hydro turbine machine. The hub of a hydro turbine runner (10) is used as a support for a beam (32) rotatable in a horizontal plane about a vertical shaft (22). This beam carries a metal dressing tool (51) and is supported via cylindrical rollers (72) on a horizontal circular runway provided by part (74) of the runner (10). Once again this construction does not provide positive location radially and vertically for the apparatus and does not prevent chatter of the dressing tool (51).

US—A—2736995 discloses a machine for grinding a pipe flange in situ. This machine has a base (4) fixedly mountable in the end of a pipe to be ground and carrying a grinding wheel (21) on a beam or shaft (22) which pivots about a vertical axis through the base (4). No support rollers are provided for the shaft (22) which merely is supported at either end in bearing plates (23, 24). Thus no provision is made for accurate positive location of the grinding wheel (21) relative to the pipe flange being ground.

It will be appreciated that although the machine tool subject hereof, is primarily intended for use with liners in situ, it is equally applicable for use on liners of the kind in question irrespective of whether they may be located either in situ in a vessel or in a workshop or elsewhere.

The invention provides, a machine tool for dressing the end face of an engine cylinder liner, comprising:—

(a) a machine base stationarily positioned within the end portion of the liner contiguous to the end face to be dressed, said base comprising a wheel adapted to be entered in the liner and held therein coaxially therewith,

(b) an upright stub shaft mounted on said base with its longitudinal axis coincident with that of the liner, and whereof an upper end portion extends above said base,

(c) a diametrically disposed beam mounted on the upper end of said shaft so that the beam is rotatable about said axis above said end face,

(d) means for rotating said beam about said axis, and

(e) metal-dressing tool devices mounted on said beam for presentation to said end face, wherein said beam has a plurality of frusto-conical guide rollers on it and said base has a frusto-conical circumferential runway within which said guide rollers ride, the conical surfaces being disposed such that the greater diameter edge of the runway is lowermost.

An example of a machine tool of the invention is illustrated in the drawings herewith.

Figure 1 is an incomplete plane of the machine tool.

Figure 2 is a sectional side elevation of a machine tool applied to an engine cylinder liner taken on line 2—2 in Figure 1.

Figure 3 is a sectional end elevation taken substantially on line 3—3 in Figure 2.

Figure 4 is a medial cross-section through a guide roller, three of which are shown in Figure 1. Both Figures 3 and 4 are taken on a somewhat enlarged scale.

Figure 5 is a partial end elevation of the machine tool shown in its association with the cover holding-down studs of the engine.

An engine liner is indicated at 6. It has an end face 7 which is shallowly stepped as indicated at 8. The machine tool includes a base in the form of a wheel 9 which is insertable into the liner at that end of it to be dressed. This "pressure" end is usually counterbored as indicated at 10 and if so the counterbore step may be used as a support for base 9 by reason of that base having its circumferential surface complementarily stepped. The base 9 fits within the liner as closely as is compatible with simple lowering of the base into the liner. With most liners the necessary clearance will be provided if the base is about 0.127 mm less than the internal diameter of the liner.

If the liner is not stepped, as indicated at 10, or in any event for that matter, the piston normally inside the liner may be raised to such a position as to constitute a rest upon which the base may stand.

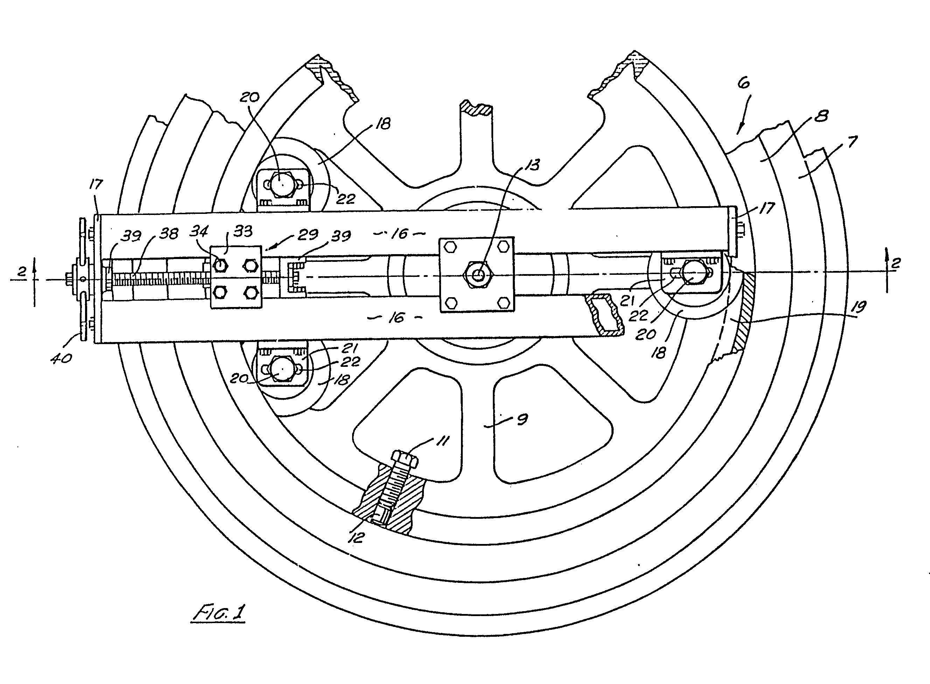

When the machine tool is in use any tendency to reaction rotation of the base is better restrained, therefore it is desirable to provide the base with a clamp or preferably three or more clamps distributed evenly about the circumference of the base. One of these clamps is shown in Figure 1. It consists of a setscrew 11 threaded in the base and able to bear against a radially slidable clamping column 12 preferably made of copper or other material softer than the metal of the liner. These clamps 11 may be tightened so to bring columns 12 to bear against the inside of the liner as to ensure centralisation of the base and at the same time provide effective restraint against any tendency on the part of the base to rotate relative to the liner.

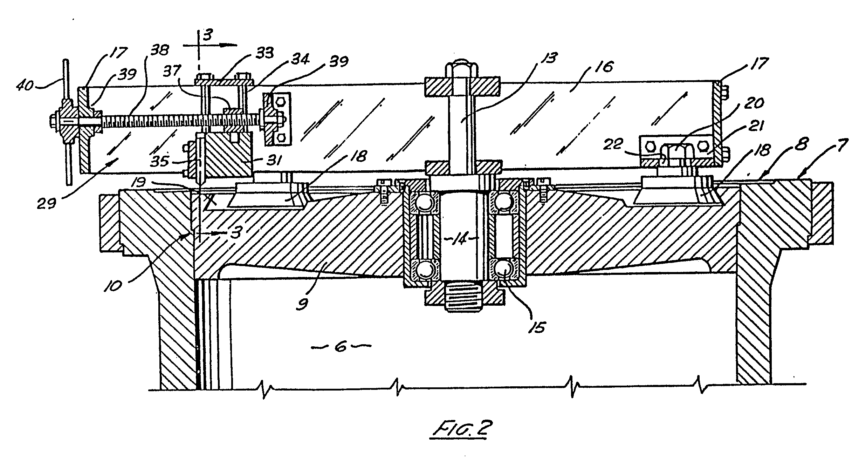

The upright shaft 13 has its longitudinal axis coincident with that of the liner and the base, and the upper end of this shaft extends above the base. In the illustrated arrangement the lower end 14 of the shaft is rotatably borne, by bearings 15, in the base 9, and the mentioned beam (consisting of twin members 16 held together at their ends by plates 17) is fixedly mounted on the upper end of shaft 13 so as to be diametrically disposed relative to the base and the liner. It will be appreciated that instead of the arrangement illustrated (mainly) in Figure 2, the shaft 13 could be fixed as a post on the base 9 and the beam 16 would then be rotatably borne on the upper end of shaft 13.

The beam is provided with a plurality of guide rollers which appropriately engage the base. The illustrated arrangement consists of three freely rotatable rollers 18. These are frusto-conically formed to run within a frustro-conical circumferential runway (19) disposed in base 9 with the greatest diameter edge of the runway lowermost. The rollers 18 are held by screws 20 engaged in brackets 21 on beam 16. The screws 20 preferably extend through elongated holes indicated at 22 so that the rollers may be adjusted into firm but free-rolling contact with the runway 19.

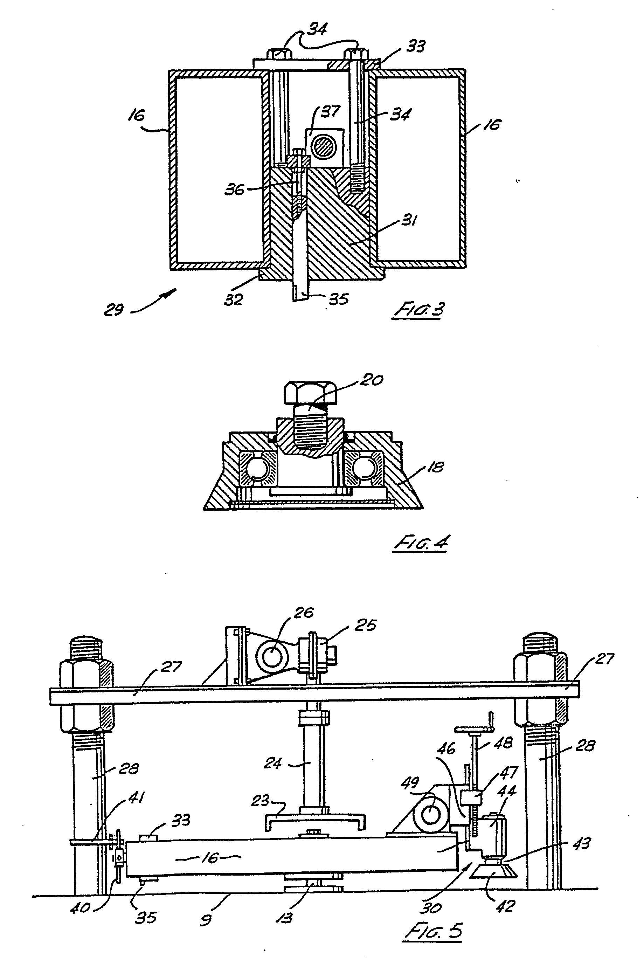

The means for rotating beam 16 relative to base 9, may consist of a channel-sectioned drive-key 23 which during normal usage is disposed between the twin members of beam 16. The key 23 is mounted on the lower end of a drive shaft 24 rotatable through appropriate reduction gears 25 and compressed air motor 26 or in any other conventional fashion. If an air or other motor is employed it may be mounted, as indicated in Figure 5, on a support beam 27 fixedly held in position on the cylinder cover studs indicated at 28. The shaft 24 is preferably length adjustable (in conventional manner) so that the key 23 may be lifted from or lowered into drive engagement with beam 16.

Beam 16 carries metal-dressing tool devices. These may consist of a cutting head indicated at 29 or a grinding head indicated at 30. For preference, both of these items are incorporated so that the liner end face may be roughed by cutting and finished by grinding.

The cutting head 29 comprises a tool-holder block 31 secured by flanges 32, clamping plate 33 and bolts 34 so as to permit the block 31 to be slidable longitudinally of the beam members 16. Block 31 carries a conventional turning tool indicated at 35. This tool is adjustable for protrusion from block 31 by operation of a screw 36 as well understood. To advance the tool 35 radially across face 8 in order to perform the

turning operation, block 31 is furnished with feed means which includes a driving nut 37 which threads on a lead screw 38. This lead screw is rotatable in bearings 39 on beam 16, and, beyond the adjacent end of the beam, the lead screw carries a spoked star wheel 40 which is arranged to mesh, one spoke at a time, with a stationary obstruction finger indicated at 41 (see Figure 5) upon each revolution of beam 16. Obstruction finger 41 may be fixedly but removably secured on one of the cylinder studs 28 so as to intrude into the circular path followed by the star wheel 40.

For preference, a grinding wheel 42 is carried on an arbor 43 in a drive motor casing 44 on guides 45 slidable in runway 46. In this instance a nut 47 is provided so that by use of lead screw 48 the grinding wheel may be brought to bear upon the work. If desired the grinding head may have a base in two parts pivoted together at 49 so that the grinding wheel may be tilted and held in tilted adjustment so to ensure proper presentation of the wheel 42 to the work. Alternatively, the grinder head may be adjustably mounted on beam 16 in much the same manner as tool-holder block 31 so that the grinding head may be fed radially during rotation of the beam 16.

## Claims

1. A machine tool for dressing the end face of an engine cylinder liner (6), comprising:—

(a) a machine base (9) stationarily positionable within the end portion of the liner (6), contiguous to the end face (7) to be dressed, said base (9) comprising a wheel adapted to be entered into the liner (6) and held therein coaxially therewith,
(b) an upright stub shaft (13) mounted on said base (9) with its longitudinal axis coincident with that of the liner, and whereof an upper end portion extends above said base (9),
(c) a diametrically disposed beam (16) mounted on the upper end of said shaft (13) so that the beam (16) is rotatable about said axis above said end face (7),
(d) means (23, 24, 25, 26) for rotating said beam (16) about said axis, and
(e) metal dressing tool devices (29, 30) mounted on said beam (16) for presentation to said end face, (7) wherein said beam (16) has a plurality of frustro-conical guide rollers (18) on it and said base (9) has a frustro-conical circumferential runway (19) within which said guide rollers (18) ride, the conical surfaces being disposed such that the greater diameter edge of the runway (19) is lowermost.

2. A machine tool according to claim 1, wherein said wheel includes at least one clamping screw (11) threaded within the base (9) and adapted to be tightened against the interior of the liner (6).

3. A machine tool according to claim 1, wherein said stub shaft (13) is freely rotatable relative to said base (9) and said beam (16) is fixed on the stub shaft (13).

4. A machine tool according to claim 1, wherein said beam (16) consists of a pair of parallel spaced-apart twin members and the means for rotating said beam (16) comprise a motor driven key (23) emplaced between said twin members.

5. A machine tool according to claim 4, wherein said metal dressing tool devices comprise a tool-carrier block (31) mounted between said twin members and movable longitudinally therebetween.

6. A machine tool according to claim 5, wherein said tool devices include feed means (37, 38) for moving said block (31) relative to said twin members, and said feed means comprise a nut (37) on said block (31), a lead screw (38) which threads through said nut (37) and is borne by its ends on said beam (16) and means to rotate said lead screw (38).

7. A machine tool according to claim 6, wherein the means to rotate said lead screw (38) comprise a spoked star wheel (40) fixed on said lead screw (38) and an obstruction finger (41) stationarily mounted relative to said liner (6) and adapted to intrude into the path of said star wheel (40).

8. A machine tool according to claim 1, wherein said metal dressing tool devices include a grinding mechanism (30, 42) movably mounted on said beam (16).

## Patentansprüche

1. Werkzeugmaschine zur Endbearbeitung der Endfläche der Einlage (6) eines Motorzylinders, gekennzeichnet durch:

(a) eine Maschinenbasis (9), die innerhalb des Endteiles der Einlage (6) stationär einstellbar ist, angrenzend an die der Endbearbeitung zu unterziehende Endfläche (7) ist, wobei die Basis (9) ein Rad aufweist, welches geeignet derart ausgestaltet ist, daß es in die Einlage (6) eingegeben und dort koaxial zur Einlage gehalten wird,
(b) eine aufrechte Stummelwelle (13), die auf der Basis (9) befestigt ist, wobei ihre Längsachse mit der der Einlage zusammenfällt und sich ihr oberer Endteil über die Basis (9) erstreckt,
(c) einen diametral angeordneten Träger (16), der auf dem oberen Ende dieser Welle (13) derart angebracht ist, daß der Träger (16) um diese Achse über der Endfläche (7) drehbar ist,
(d) Einrichtungen (23, 24, 25, 26) zum Drehen des Trägers (16) um die genannte Achse und
(e) Werkzeugvorrichtungen (29, 30) für die Metallendbearbeitung, welche auf dem Träger (16) montiert sind zum Hinwenden zu der Endfläche (7), wobei auf dem Träger (16) eine Vielzahl von kegelstumpfförmigen Führungsrollen (18) vorgesehen ist und die Basis (9) eine kegelstumpfförmige Umfangslaufbahn (16) aufweist, in welcher die Führungsrollen (18) laufen, wobei die konischen Oberflächen derart angeordnet sind, daß die Kante der Laufbahn (19) mit dem größeren Durchmesser am weitesten unten liegt.

2. Werkzeugmaschine nach Anspruch 1, dadurch gekennzeichnet, daß das Rad mindestens eine Klemmschraube (11) aufweist, die innerhalb der Basis (9) verschraubt und geeignet derart ausgestaltet ist, daß sie gegen das Innere der Einlage (6) festziehbar ist.

3. Werkzeugmaschine nach Anspruch 1, dadurch gekennzeichnet, daß die Stummelwelle (13) bezüglich der Basis (9) frei drehbar ist und der Träger (16) auf der Stummelwelle (13) befestigt ist.

4. Werkzeugmaschine nach Anspruch 1, dadurch gekennzeichnet, daß der Träger (16) aus einem Paar von parallelen, im Abstand angeordneten Zwillingsteilen besteht und die Einrichtung für die Drehung des Trägers (16) einen motorgetriebenen, zwischen den Doppelteilen eingesetzten Keil (23) aufweist.

5. Werkzeugmaschine nach Anspruch 4, dadurch gekennzeichnet, daß die Werkzeugvorrichtungen für die Metallendbearbeitung einen Werkzeugträgerblock (31) aufweisen, der zwischen den Doppelteilen angebracht und längs zwischen diesen bewegbar ist.

6. Werkzeugmaschine nach Anspruch 5, dadurch gekennzeichnet, daß die Werkzeugvorrichtungen Zuführeinrichtungen (37, 38) aufweisen, für das Bewegen des Blockes (31) relativ zu den Doppelteilen und daß die Zuführeinrichtung eine Mutter (37) auf dem Block (31), eine Leitspindel (38), die mit ihrem Gewinde durch die Mutter (37) hindurchgeht und von ihren Enden auf dem Träger (16) getragen wird, und Einrichtungen zum Drehen der Leitspindel (38) aufweist.

7. Werkzeugmaschine nach Anspruch 6, dadurch gekennzeichnet, daß die Einrichtungen zum Drehen der Leitspindel (38) ein Speichensternrad (40) aufweisen, welches auf der Leitspindel (38) befestigt ist, sowie einen Blockierfinger (41) aufweist, der bezüglich der Einlage (6) stationär angeordnet und geeignet derart ausgestaltet ist, daß er in den Weg des Sternrades (40) hineinragt.

8. Werkzeugmaschine nach Anspruch 1, dadurch gekennzeichnet, daß die Werkzeugvorrichtungen für die Metallendbearbeitung einen auf dem Träger (16) bewegbar angeordneten Schleifmechanismus (30, 42) aufweisen.

**Revendications**

1. Machine-outil pour rectifier la face terminale d'une chemise de cylindre de moteur (6) comprenant:

(a) une embase de machine (9) susceptible d'être placée en position fixe dans le tronçon terminal de la chemise (6) en contiguité avec la face terminale (7) à rectifier, ladite embase (9) comportant une roue agencée pour être introduite dans la chemise (6) et maintenue dans celle-ci coaxialement à elle,

(b) un bout d'arbre vertical (13) monté sur ladite embase (9), son axe longitudinal coïncidant avec celui de la chemise, et dont un tronçon terminal supérieur s'étend au-dessus de ladite embase (9),

(c) une poutre disposée diamétralement (16) montée sur l'extrémité supérieure dudit arbre (13) de façon que la poutre (16) puisse tourner autour dudit axe au-dessus de ladite face terminale (7),

(d) des moyens (23, 24, 25, 26) propres à faire tourner la dite poutre (16) autour dudit axe, et

(e) des dispositifs à outil à rectifier le métal (29, 30) montés sur ladite poutre (16) pour se présenter à ladite face terminale (7), caractérisée en ce que ladite poutre (16) porte sur elle une pluralité de rouleaux de guidage tronconiques (18) et ladite embase (9) a un chemin de roulement circonférentiel tronconique (19) dans lequel roulent lesdits rouleaux de guidage (18), les surfaces coniques étant disposées de façon que le bord de plus grand diamètre du chemin de roulement (19) soit situé tout en bas.

2. Machine-outil selon la revendication 1, caractérisée en ce que ladite roue comporte au moins une vis de serrage (11) vissée dans l'embase (8) et agencée pour être serrée contre l'intérieur de la chemise (6).

3. Machine-outil selon la revendication 1, caractérisée en ce que ledit bout d'arbre (13) peut tourner librement par rapport à ladite embase (9) et ladite poutre (16) est fixée sur le bout d'arbre (13).

4. Machine-outil selon la revendication 1, caractérisée en ce que ladite poutre (16) est composée de deux organes jumelés parallèles et espacés et les moyens propre à faire tourner ladite poutre (16) comprennent une clavette entraînée par moteur (23) mise en place entre lesdits organes jumelés.

5. Machine-outil selon la revendication 4, caractérisée en ce que lesdits dispositifs à outil à rectifier le métal comprennent un bloc porte-outil (31) monté entre lesdits organes jumelés et mobile longitudinalement entre eux.

6. Machine-outil selon la revendication 5, caractérisée en ce que lesdits dispositifs à outil comportent des moyens d'avance (37, 38) pour déplacer ledit bloc (31) par rapport auxdits organes juméles, et lesdits moyens d'avance comprennent une noix (37) portée par ledit bloc (31), une vis-mère (38) qui se visse dans ladite noix (37) et est portée par ses extrémités sur ladite poutre (16) et des moyens propres à faire tourner ladite vis-mère (38).

7. Machine-outil selon la revendication 6, caractérisée en ce que les moyens propres à faire tourner ladite vis-mère (38) comprennent une roue étoilée à rayons (40) fixée sur ladite vis-mère (38) et un doigt-obstacle (41) monté fixe par rapport à ladite chemise (6) et agencé pour s'interposer sur le trajet de ladite roue étoilée (40).

8. Machine-outil selon la revendication 1, caractérisée en ce que lesdits dispositifs à outil à rectifier le métal comportent un mécanisme de meulage (30, 42) monté mobile sur ladite poutre (16).

FIG. 1

0 036 917

FIG.2

_FIG.3_

_FIG.4_

_FIG.5_